# EUROPEAN PATENT SPECIFICATION

(11) **EP 4 093 177 B1**
(45) Date of publication and mention of the grant of the patent: **04.12.2024**
(21) Application number: 21701120.4
(22) Date of filing: 19.01.2021
(51) Int. Cl.: A01C 7/04, A01C 7/08

(54) **PNEUMATIC DISPENSER FOR SOWING MULTIFORM SEEDS IN LOW AND HIGH DOSES**
PNEUMATISCHER VERTEILER FÜR DIE AUSBRINGUNG VON UNTERSCHIEDLICHEN FORMEM SAATGUT IN NIEDRIGEN UND HOHEN DOSIERUNGEN
DISTRIBUTEUR PNEUMATIQUE POUR SEMER DES GRAINES MULTIFORMES EN DOSES FAIBLES ET ÉLEVÉES

(30) Priority: 21.01.2020 AR P200100151
(43) Date of publication of application: 30.11.2022
(73) Proprietor: Agrometal Sociedad Anonima Industrial, Córdoba, 2659 (AR); Negrini, Rosana María, Córdoba, 2659 (AR)
(72) Inventor: NEGRINI, Rosana María, Córdoba, 2659 (AR)
(74) Representative: Clarke, Modet y Cía., S.L.
(86) International application number: PCT/EP2021/051082
(87) International publication number: WO 2021/148414

(56) References cited:
- WO-A1-2019/092645
- US-A- 5 848 571
- US-A1- 2008 236 462
- US-A1- 2020 359 558

## Description

### Field of the invention

The present invention relates to the field of devices, means and arrangements used in the agribusiness, more particularly in sowing machines, and more preferably relates to a pneumatic seed dispenser with negative pressure, unlike the existing pneumatic dispensers, allowing the containment of the seeds even in a horizontal position and supplying them to the sowing plate in a vertical position, dispensing seeds of various sizes, from small to very large. Maintaining precision in both low and high doses of sowing.

### Description of the Prior Art

The importance of crop yields in modern agriculture is the result of a joint evolution of soil management practices. The high production costs that exist today lead producers to seek to optimize the use of inputs. In this, the sowing operation has a transcendental role that not only implies the optimization of the seed as a high cost input, but also leads to the achievement of a planned plant location, a uniform distribution and with a homogeneous development that will have a decisive influence on the expression of the yield potential, the optimization of the gap available for each plant, which increases the yield of the crop by minimizing the intraspecific competition for light, water and nutrients, and these are directly dependent on the seed dosing system.

A coarse grain-sowing machine, including a horizontal tool bar attached to a hitch set to be towed by a tractor, has a set of wheels that allow its offset. It is also made up of a chassis that provides structure to all the components. Above it, there is a container hopper, which can be centrally loaded, and from there, by means of an air current, the seeds are transferred to each sowing line.

Another version of the sowing machine called mono-hopper with seed exhaust by gravity has individual drops for each sowing line. In addition, in less demand of use, the individual hoppers are located on each body of sowing. In the chassis, it has a main horizontal tube or tool bar, wherein the sowing bodies are located along the length, distanced from each other according to the desired sowing distance. This position can be fixed for each seeder model or can be transformed at a different distance. The "seed dispenser" is located on top of the sowing bodies. These bodies can move vertically through parallel bars, they have two basic elements that are smooth discs with sharp edges, located on an inclined shaft that allows the rotation, maintaining the contact of both edges in the front and its angular opening is open backwards. This allows generating a sowing furrow in the soil to receive the seeds. In the center of these elements is located a seed conductor tube, this is the part that receives the seeds coming from the dispenser.

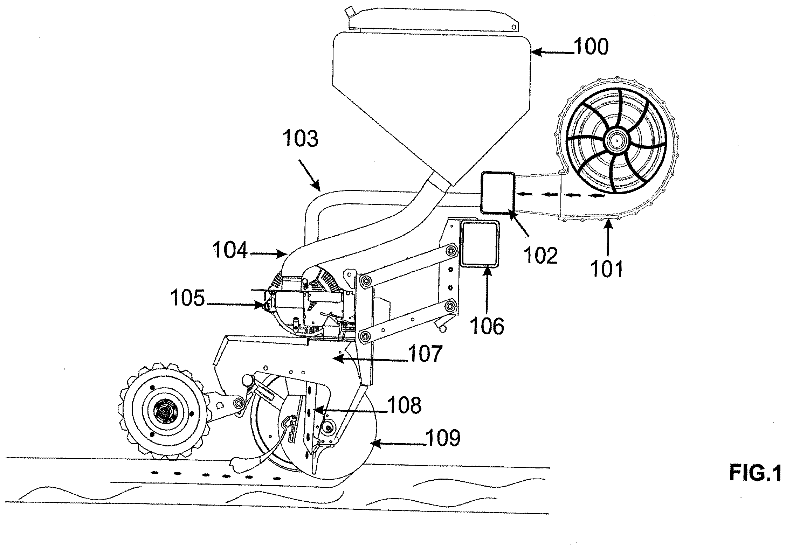

In general, more particularly in accordance with Figure 1 related to the prior art, wherein a scheme of a sowing set with seed feeding by gravity fall is illustrated, the constituent elements are: main hopper 100, turbine suction 101, air conductive suction tube 102, seed exhaust hose 104, pneumatic grain dispenser 105, cross beam 106, sowing body 107, discharge tube 108 and planting discs 109.

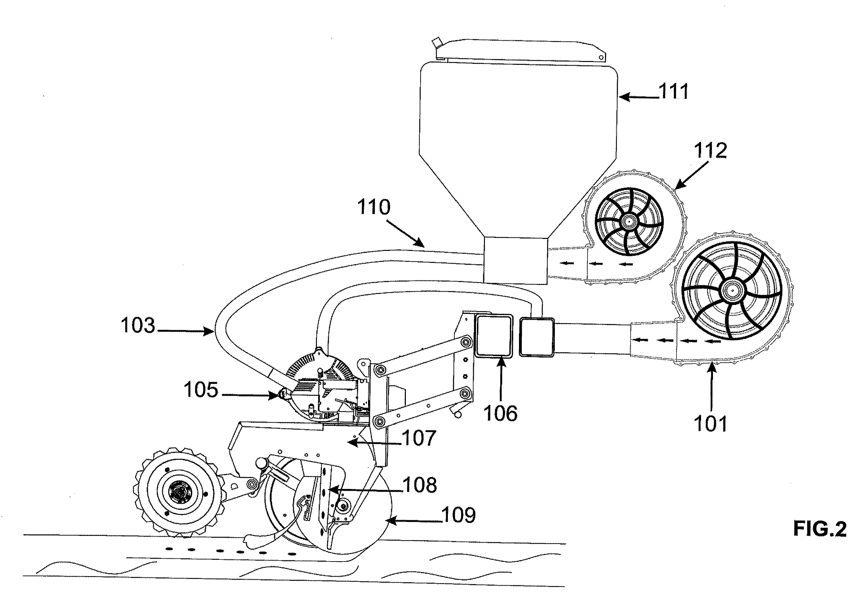

In Figure 2, also related to the prior art, a general scheme of an air stream seed feeding sowing set is presented. Wherein said set comprises a pressurized hopper 111, a blower turbine 112, a seed conducting hose 110, a cross tube 106, a pneumatic seed dispenser 105, a sowing body 107, an exhaust tube 108 and the seed planting discs 109. Further relevant prior art is US 5 848 571 A, WO 2019/092645 A1 and US 2008/236462 A1.

Possibly the seed drill metering unit is the most important element of the seed drill. Coarse grain seed drills are characterized by the use of single grain dispensers, which are capable of distributing the seeds individually.

The furrow seeders are designed to place the seeds in spacings determined according to each type of seed.

### Seed Metering Systems

The mechanical dosing units with horizontal or inclined plate are known wherein the collection of the seeds is done by means of a plate with bores. Both the thickness of the plate and the size of the bores are limited by the shape and dimensions of the seed to be sown (width, length, thickness), in order to capture one per bore, which determines a limitation in the versatility of the mechanism depending on the seed used and the uniformity of the same. In the horizontal models, the flush triggers or brushes are used to regulate the entry of seed into the seed catchment area, and the driving triggers drop the seed onto the exhaust area of the counter plate and from here the seed is lowered by the action of gravity through the exhaust tube into the furrow.

Other known mechanical meters are finger meters, which are constructed so that radially positioned fingers (metal tabs) are held in contact with the face of a smooth plate and grasp the seeds as they pass through the seed reservoir, subsequently releasing those seeds as they pass through an empty area in the plate and from there fall by gravity into the seed exhaust conduit. Although these mechanical seed meters are effective, they have limited capacity to ensure uniformity of individualized seed delivery.

Unlike mechanical seed meters, in pneumatic seed meters the plate has smaller diameter bores than the seeds and the seeds are captured over said bore (they do not pass through it) by means of a stream of air that can be either suction or pressure. This defines a first categorization of pneumatic systems, i.e. those that work by negative pressure (suction or vacuum) or by positive pressure (blowing).

### Types of Pneumatic Dispensers

In its most basic form, the seed dispenser includes a container and inside it a seed receiving plate (sowing plate). We can differentiate the housing as a fixed element with a configuration in such a way that it sectorizes the areas and generates a reservoir to contain the seeds. The sowing plate resides inside the housing and rotates around a central axis that is generally horizontal. As the sowing plate passes through the seed reservoir it collects seeds individually. The seeds are then distributed in a seed conduit wherein they fall into the sowing furrow.

Pneumatic seed dispensers with honeycombed plates, by "pressure", are made up of a plate that has a plurality of small cavities with a certain shape. These cavities, with a drilling smaller than the size of each seed, allow the seeds to be lodged in these cavities, driven and supported by the air pressure generated by a hydraulically driven turbine. The plate rotates, until each drilling reaches a point wherein the pressure is canceled and the seed is released. In some cases they have a series of brushes that act as flushes, i.e. seed orientators on the drilling. The pressure must be regulated, according to the type of seed and its weight.

The pneumatic dispensers, by "suction", are constituted by a flat plate in vertical position and there are variants of plates with cavities in low relief. The bores in the plate are smaller than the seed and in communication with the suction channel produced by a vacuum turbine, each seed is captured by the plate and remains there until, by the rotation of the plate, it reaches the point of detachment wherein the suction cut for release occurs, and falls by gravity. In order to prevent duplication of seeds in the same bore, a flush is used, which can be fixed or mobile, to orient and leave only one seed. When soybeans are sown, the plate usually has two rows of drilling for high planting density, or a single row for lower densities. A hydraulically driven turbine must have sufficient capacity to produce the required suction. Under certain conditions it may be necessary to regulate the suction according to the size and weight of the seed. Once the seeds have adhered to the bores in the plate in the feeding phase, they are transported during the rotation of the plate until they reach the point of fall wherein they are released, and from there they fall by gravity. The suction area is the one that limits the beginning of the seed collection and the end wherein the seed is released through the conductor tube into the furrow.

Pneumatic metering units can be driven by mechanical transmission connected in all the seeding lines to a shaft which is commanded by a transmission box, driven by a driving wheel which is kept in contact with the soil. In recent times the demand for electric motor drive systems is growing.

To obtain the best conditions in the agricultural crops and harvest, it is important that the seeds are placed at a constant and equal distance from each other, maintaining the uniformity in the depth wherein the seed is housed in the furrow formed in the soil. This improves crop yields and thus increases the profitability of the sowing.

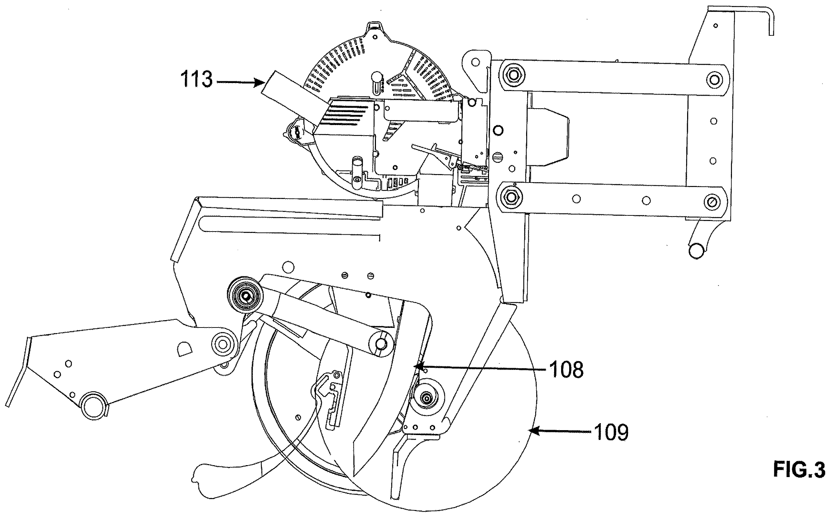

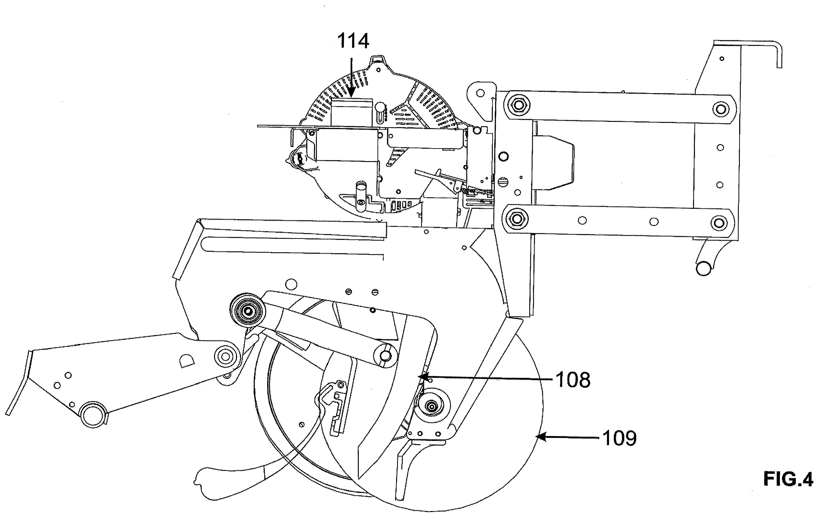

In accordance with **Figure 3** related to the prior art, a pneumatic dispenser fed with seeds through a positive air stream 113 is shown. And in **Figure 4** a gravity fed seed dispenser 114 is shown.

Currently, pneumatic dispensers have seed receptacles with a low volume of content and cannot dose large seeds such as beans and peanuts. This makes it difficult for the seeds to circulate correctly to the sowing plate, causing an obstruction in the entrance.

With respect to the reduced diameters of the sowing plates in situations of high seed dosages, it causes that the plate must have higher revolutions to deliver the desired doses and this causes that the seeds are detached from the plate with high rotational speed generating impacts on the exhaust tube, causing that the seed is delivered to the furrow with delay. Or double bore row seeding plates are used, but these devices lose dosing accuracy.

Pneumatic seed fed metering devices through a positive airflow, usually present problems of overflow inside, delivering seeds without metering through the exhaust tube due to failures in the design of a system to regulate the volume contained.

Pneumatic dispensers are prepared to work in vertical position, the volume of seeds contained inside can spill if the dispenser changes to horizontal position. This situation occurs when the machine performs chassis folding manoeuvres by rotating the tool bar to change from the sowing position to the sowing machine's transfer position.

The setting and changing of the sowing plates in the pneumatic seed drills involves time losses that can be reduced with anchoring and quick release mechanisms, without the need for tools.

The systems that generate the suction area and the seed flushes, according to their shape and material used, come to perform too much friction on the moving parts causing an increase in the torque required for the performance of the dispenser. This fact, when using electric drive, increases the consumption of electric energy. And, when this happens, more elements must be added such as an electric generator and additional batteries to cover the consumption demand that the tractor cannot supply.

The access of the suction hose that is connected to the dispenser requires integrated or coupled nozzles in the dispenser cap, being defined whether the hose connection is to the front of the seeding machine or to the rear, which implies lack of adaptability to different machine models. Some dispenser brands offer different nozzles to suit the location of the hose.

### Summary of the Invention

The present invention is defined by the claims and relates to a pneumatic seed dispenser which permits the delivery of the seeds into the soil with the desired density and uniformity of spacing.

This dispenser is designed to be placed on the sowing body of a coarse grain sowing machine or fine grain sowing machine with coarse grain kit, receives the seeds from a hopper, doses them and releases them through a seed exhaust tube. The seeds can reach the receptacle of the dispenser falling by gravity or by a current of blown air and, once entered, are captured by a negative air current which, by suction, leaves the seeds retained against the bores of the sowing plate. These voids called alveoli have a size determined by the type of seed to be implanted and are smaller than the seed.

The use of the pneumatic dispensers was conceived from the beginning to be used by means of a feeding of seeds that fall by gravity. In today's use with air stream seed feeding, a new functional concept is required. Since air stream systems move the seeds to a receptacle and do not stop carrying seeds until the end is blocked with them, the dispenser should have an area that allows the entrance of seeds to be regulated, allowing the entrance of the necessary amount to dose, and it should also have an air outlet that reaches the interior of the dispenser's receptacle to depressurize the circuit.

The dispenser according to the present invention solves the problem of being able to dose all types of seeds and of different calibers, achieving a correct uniformity of delivery of seeds to the furrow in the soil. Through its internal elements which allow regulating in a quick and simple way the leveling of the seeds, which enables always dosing one seed per alveolus, not allowing more quantity of seeds to go in order to avoid intra-specific competition. For each type of seed to be implanted, a specific perforated plate is used, which is changed in the dispenser quickly and easily.

It is the subject matter of the present invention, a pneumatic dispenser having a receptacle of suitable size for receiving, containing and dispensing seeds of various sizes.

It is the subject matter of the present invention, a pneumatic dispenser having a guillotine regulating the flow of seeds into the receptacle, with external regulation and with a numbered step graduation. Said guillotine has a substantially triangular shape and is vertically mounted in a movable form commanded by an external knob to regulate the flow of seeds in both dispensers with seed feeding by gravity and in dispensers with seed feeding by air current.

It is the subject matter of the present invention, it is then a pneumatic dispenser having external regulation of the flushes on the seed plate and of the position of a seed intake flow guillotine.

It is the subject matter of the present invention, a pneumatic dispenser which allows low and high seed rates with low rotational speed, while maintaining a high seed rate.

It is subject matter of the present invention, a pneumatic dispenser of low torque and with minimum friction of elements on the seeding plate, being the whole rotation system mounted on two ball bearings.

It is the subject matter of the present invention, a pneumatic dispenser of a honeycombed plate with low relief depressions which improve the seed collection and function as seed removers during the loading of the seed on the sowing plate.

It is, furthermore, another subject matter of the present invention to provide a pneumatic dispenser, which allows quick access to the area of the seeding plate, by removing the cap of the dispenser by means of 1/4 turn of two locks without the need to remove these parts.

It is also another subject matter of the present invention to provide a pneumatic seed dispenser having a quick change of seeding plates, carried out by a simple turn of a locking part and without the need for tools.

It is, furthermore, another subject matter of the present invention to provide a pneumatic dispenser with a floating seed flush set of permanent contact against the surface of the sowing plate and with external regulation of its position.

It is still another subject matter of the present invention to provide a pneumatic seed dispenser having a suction inlet nozzle to the metering unit which allows the hose to be positioned vertically. Allowing a versatile connection which can come from the rear of the machine or from the front.

It is furthermore another subject matter of the present invention to provide a pneumatic dispenser, with a system of mounting to the planting body with a quick anchorage, which allows it to be placed and removed quickly without requiring hand tools.

It is furthermore another subject matter of the present invention to provide a pneumatic dispenser having a support structure with attachment to the planting body with integrated feeding nozzle.

It is furthermore another subject matter of the present invention to provide a dispenser which can keep the seeds in the catchment receptacle, even if the metering device is placed in a horizontal position.

### Brief Description of the Figures

For greater clarity and understanding of the subject matter of the present invention, it has been illustrated in several figures, in which the invention has been depicted in one of the preferred forms of embodiment, all by way of example, wherein:
**Figure 1** illustrates a scheme of a sowing set with seed feeding by gravity fall according to the prior art.
**Figure 2** shows a general scheme of a seed feeding sowing assembly by air stream according to the prior art.
**Figure 3** shows a pneumatic dispenser fed with seeds by a positive air current according to the prior art.
**Figure 4** illustrates a dispenser with gravity feed of seed from the prior art.
**Figure 5** illustrates a preferred form of embodiment of a dispenser with positive air pressure feeding.
**Figure 6** shows a perspective view of the right side of the housing of a preferred form of embodiment of a dispenser according to the present invention with gravity feed of seeds.
**Figure 7** shows a perspective view of the left side of the cap of a preferred form of embodiment of the dispenser of the present invention.
**Figure 8** shows the housing of a preferred form of embodiment of the dispenser of the present invention.
**Figure 9** is an interior view of the housing of a preferred form of embodiment of the dispenser of the present invention.
**Figure 10** shows a principal exploded view of a preferred form of embodiment of the dispenser of the present invention.
**Figure 11** is a perspective view of the dispenser of the present invention with an open section allowing identification of the components in contact with the seeding plate which are shown in Figure 10.
**Figure 12** allows the identification of the assembly of the dispenser to the seed body as shown in Figure 5.
**Figure 13** shows an internal cutting of a preferred form of embodiment of the dispenser according to the present invention.
**Figure 14** shows the sowing plate showing its main characteristics.
**Figure 15** shows the elements of flush registration.
**Figure 16** shows the main areas of the seed dosing stages of the dispenser flush according to the invention.
**Figure 17** shows the dispenser of the present invention in a horizontal position during transport on a sowing machine whose transport position requires the rotation of the sowing bodies, keeping the seeds in the catching receptacle.

### Detailed Description of the invention

With the subject matter, then, of showing and describing the advantages and advances of the dispenser subject matter of the present invention, different forms of embodiment will be described below by means of the accompanying Figures.

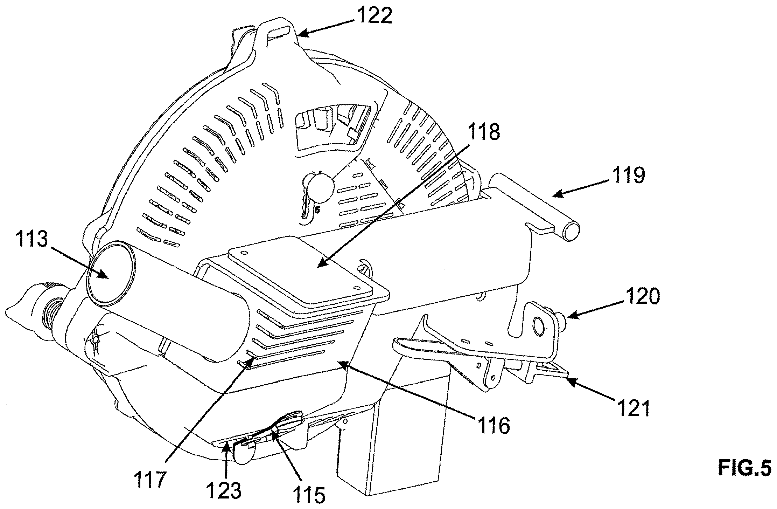

**Figure 5** is used to illustrate the details of a preferred form of embodiment of a dispenser according to the present invention with positive air pressure feed, such as a conductor tube 113 linked to the seed reservoir 116, with air outlet slots to depressurize the circuit 117 and a translucent display to observe the normal operation of the entered seeds 118. A cylindrical bar for attachment to a support 119, centering device and support positioner 120, quick leverage attachment system 121, centering device and female locking area in housing 122. A cap of cleaning mouth 123 and the elastic bands of locking 115.

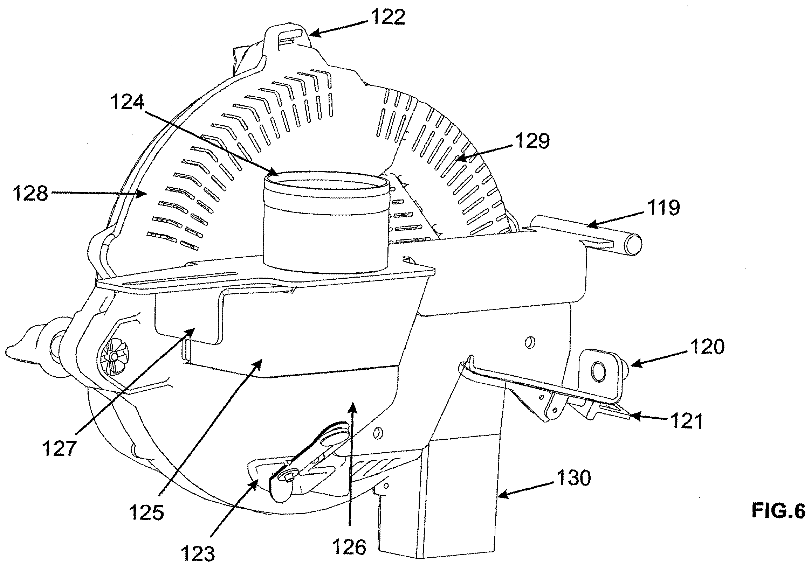

**Figure 6** shows a perspective view of the right side of the housing of a preferred form of embodiment of a dispenser according to the present invention with gravity feed of seeds. It shows the following parts: a gravity seed inlet nozzle 124, reservoir 125 connected to the seed supply reservoir 126, a seed passage shut-off guillotine 127, dispenser housing 128 with air recirculation slots 129, and a seed release sector 130 which is linked to the exhaust tube.

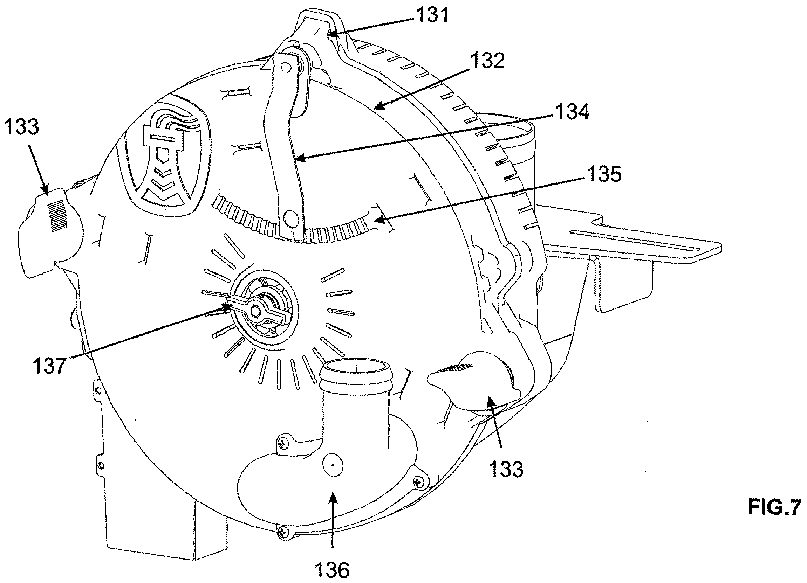

**Figure 7** shows a view of the left side of the dispenser cap. The following parts are identified: male cap lock link 131, dispenser cap 132, two snap shut knobs 133, flush register lever 134, register scale surface 135, vertical air suction inlet nozzle 136, and a drive cam 137.

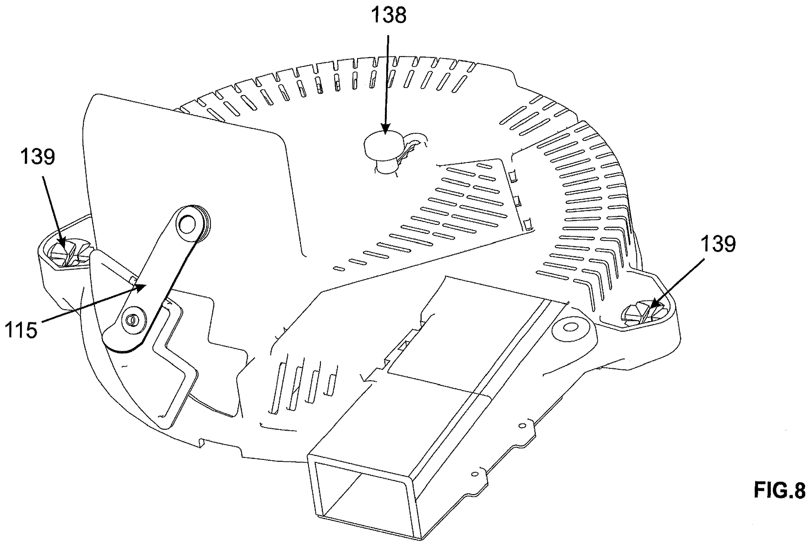

**Figure 8** shows the housing with details of the following parts: a guillotine position register knob 138 and the two areas with low relief to lock the cap lock 139.

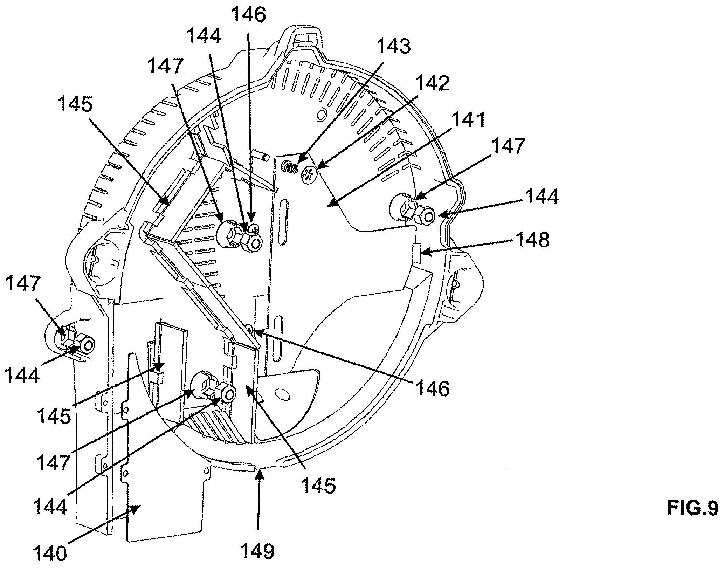

**Figure 9** is an interior view of the housing that identifies the cover plate for a seed discharge area 140, a flow control guillotine 141, a lock washer 142, a compression spring for guillotine handle 143, housing fixing nuts to the bracket 144, seed content delimiting brushes 145, guillotine fastening screws 146, nut retention housing 147, guillotine guide 148, foreign particle drainage area 149 and foreign particle exhaust receptacle 150. In particular, the regulating guillotine 141 of the flow of seeds into the receptacle comprises an external regulation with a numbered graduation. Said guillotine 141 has a substantially triangular shape and is vertically mounted in a movable form, commanded by an external knob 138 (see **Figure 8**) to regulate by means of a partial closure the flow of seed in both metering units with gravity or airflow seed feed.

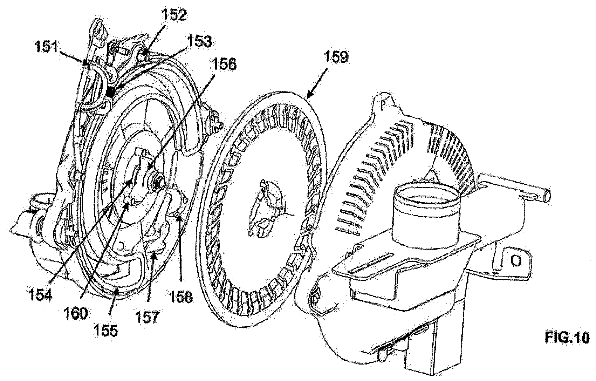

**Figure 10** shows a main exploded view, namely: a seed flush set 151, an eccentric shaft for flush adjustment 152, a compression spring for permanent contact of the flush 153, a plate drive plate 154, a suction boundary seal 155, a plate lock with triple contact spring 156, a removable bracket for a cleaning wheel 157, a plate pocket cleaning wheel 158, a seed drill plate 159 and three seed drill shafts 160.

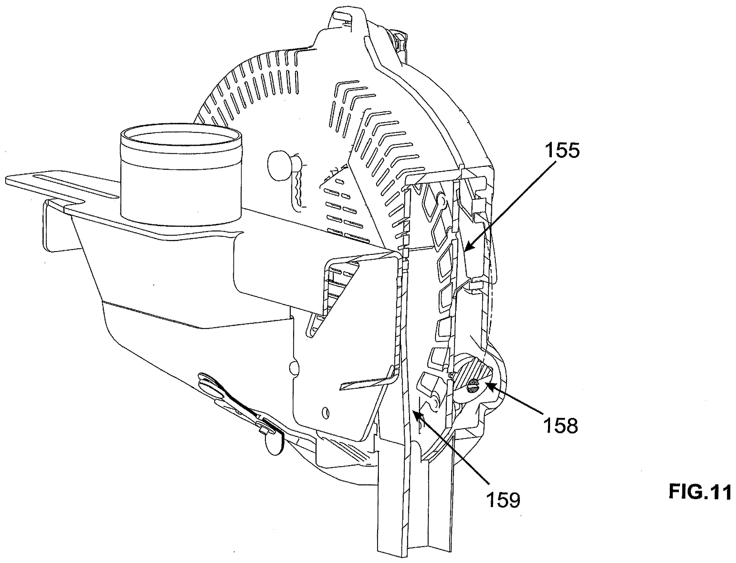

**Figure 11** is a perspective view with an open section that allows the identification of the components in contact with the seeding plate, which are detailed in Figure 10.

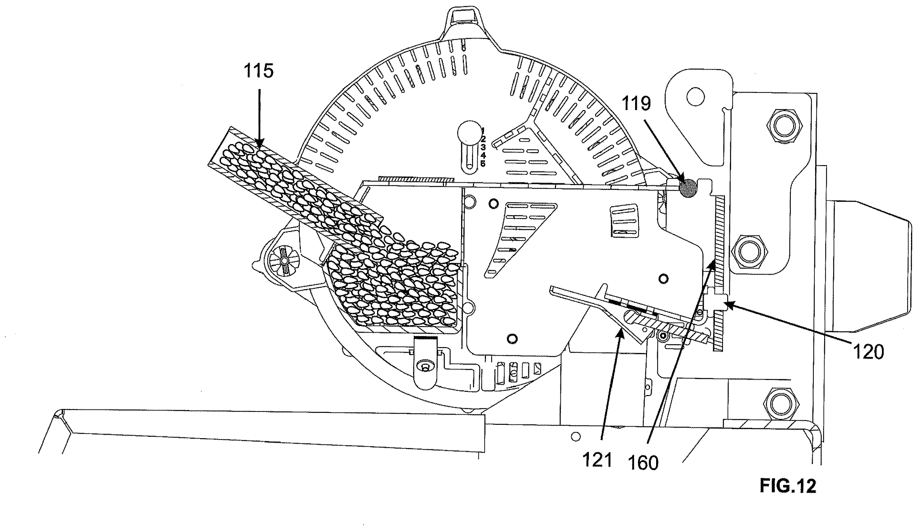

**Figure 12** allows the identification of the assembly of the dispenser to the seed body, with the references indicated in Figure 5 and the dispenser receiver bracket 160.

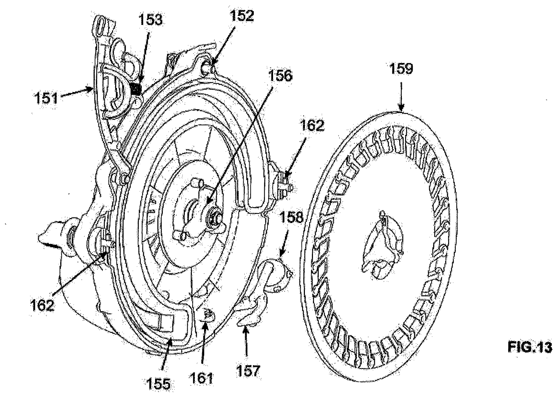

**Figure 13** shows the housing 161 to receive the cleaning wheel 158 bracket 157, a spring pin 162 from the locking pressure knobs 133 and other items already described in Figure 10.

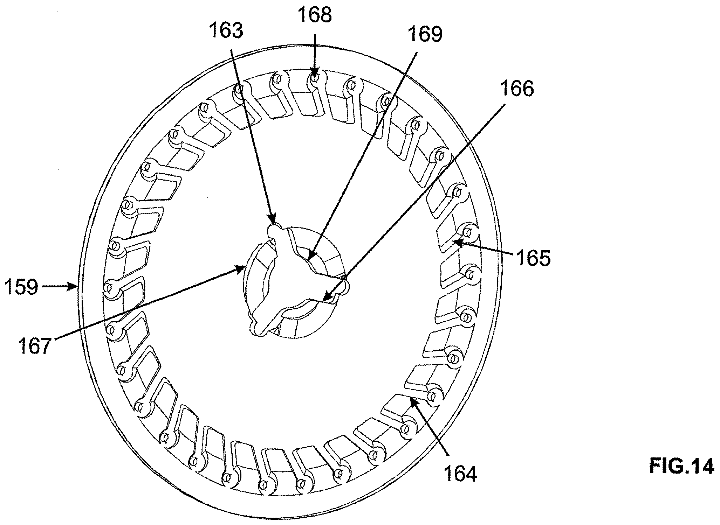

**Figure 14** shows the sowing plate 159 with its main characteristics. The low relief remover zone is perimeter, wherein the right lateral sector of the low relief 164 is right angle to remove the seeds during rotation and the opposite side with inclination 165 to detach any foreign particles that are lodged in the low relief. The cylindrical drilling that cross the plate 168 are commonly called alveoli in the language of sowing. The center of the plate 169 has a cylindrical shape which allows to center the plate with the drag plate 154, it has a ramp shaped surface 167 and works in conjunction with the plate lock 156. The anchoring area comprises three rounded sectors 163, which maintain contact with the three drive shafts of seed plate 159.

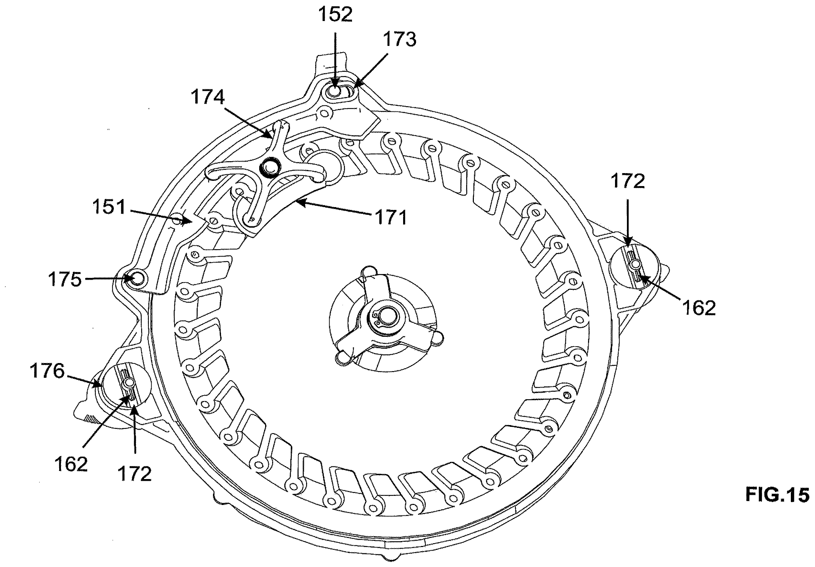

**Figure 15** presents the flush register elements, the elongated slot 173 to allow the offset of the eccentric shaft 152 to regulate the movement of the flush set. The lower flush 171 moves in conjunction with the upper flush, because it is linked by a bridge 174. The shaft 175 is the center of rotation of the flush set. The sector that links the cap to the housing has two cylindrical sections of the same cap material that serve as locators 176, the cylindrical half rod 172 is to receive the elastic spine 162 of the cap lock.

Making reference to the figures detailed above, the present invention consists of a new pneumatic seed dispenser, which allows the dispensing of multiform seeds from fine grains such as "wheat" and large grains such as "beans or peanuts", individually and at the distance from each other required by the user. Having external regulations and in a very understandable way for its use.

As a highlight, the dispenser can be mounted on the seed body without the need of tools. **Figure 12** allows interpretation of the system, wherein the cylindrical hitch bar 119 is hung on the receiver bracket 160, the centering shaft 120 must be inserted, and finally the quick lever hitch 121 is operated. Another highlight can be interpreted by looking at **Figures 6** **and** **7****,** where you can see the centering device and female locking area in the housing 122 and the centering device and male locking area of the cap 131, these elements are responsible for improving two functions, one is the guidance during the placement of the cap and the other is to provide a third point of blocking the cap. By operating two pressure/locking knobs 133, the cap can be removed and there are no loose elements to be misplaced. When the cap is removed, the seed plate is accessible. To remove the seed plate, simply turn the triple contact spring plate lock 156 by 6.35 mm (1/4") and the seed plate can be removed. The necessary adjustments to set up the seed inlet flush and guillotine set are accessible from the outside.

**Figures 1** **and** **2** are used to show the two systems for feeding seeds into a dispenser according to the state of the art, showing the main components of the system. **Figure 5** identifies the parts of a positive air stream seed feeding nozzle, a metal tube 113 integrated into the top sheet seed reservoir 116, this has slots in the reservoir 117 which carry out the depressurization of the system, the tube 113 is connected to a flexible hose 110 which carries the seeds from the centralized hopper 111. Once the seeds are entered and when the level is completed until the mouth of the tube is covered, this generates the cut of entry of the seeds, until they are dosed with the sowing plate 159, as illustrated in **Figure 12****.** This dispenser, unlike others in the market, allows the dosage of multiform seeds, having a great capacity for feeding the seeds, comprises sowing plates designed for the main types of grains and alveolus cleaning wheels characterized for each plate. The system of adjustable seed flush allows the use of the same component with different types of grains and sizes, ensuring that only one seed is left in contact with the seedbed alveolus and that any surplus is removed, unlike other fixed flushes that do not have regulation, reducing their effectiveness with the variability of grain sizes. The simplicity of the system makes it easy to interpret the use of the flush register and its manipulation.

The sowing plate 159 in **Figure 14****,** is a circular disc that is positioned on a central axis of the dispenser, each disc comprising a plurality of passing openings 168, called alveoli, located radially and with equal spacing. It has an area under relief 170 that behaves as a seed agitator to improve the collection during the rotation of the plate. This bas-relief has the right side with a right angle 164 to perform the removal during the plate rotation, and the opposite side has an inclination to slide foreign particles that accumulate in this area to the outside through the exhaust tube or to the impurity receptacle 150.

There is also a generic plate that comprises different amounts of bores or alveoli, and diameters to fit more types of seeds covering a greater variety of them.

The shaft that provides movement to the plate has a cam 137 from its external side, it is mounted on two spherical bearings or alternatively a polymer bushing with a high offset coefficient can be used, coupled to the shaft by means of a ratchet the rotation movement that can come from a mechanical transmission drive or from an electric motor is applied to it.

Behind the sowing plate as shown in **Figure 13****,** there is a vacuum zone delimited by a flexible weatherstrip 155, which allows a constant vacuum to be maintained against the plate, operating at low friction. On the housing there are two projections with cylindrical housing 161 to receive the bracket of the cleaning wheel 157; this bracket has two wings that, when pressed inwards, are bent to be able to be mounted on the cylindrical housing.

As it has delimiting brushes in the seed storage sector, it allows that when the dispenser is in a horizontal position during supposed cases of machines that make rotation of the main bar of sowing bodies bracket, seeds are not spilled involuntarily towards the zone of the exhaust tube.

The dispenser housing 128 can be made of translucent plastic material to facilitate the visualization of the components inside the dispenser.

According to the description provided in **Figures 8** **and** **9****,** the housing has an element called register handle 138, having a low relief that allows positioning the height of the cutter point by point, as well as identifying its position and being able to repeat it in the other dispensers. The compression spring that operates on the knob, gives it security to maintain its position. The flow regulation guillotine 141 has a certain geometry to avoid that the positive pressure air that feeds the seeds to the dispenser can agitate the seeds and they overflow towards the exhaust tube in a direct way, without being dosed by the sowing plate. The arrangement of the boundary brushes of the seed collection chamber 145, due to their location, allows to contain the seeds that have entered the collection area both in vertical and horizontal position. These brushes can be replaced without tools, they are held in place by wings made of the same material as the housing, and the recess is by the offset from one end. The housing is held closed by two locking knobs 133, these knobs have a cylindrical shaft that links the grip area and at the opposite end is located transversely an elastic spine. **Figure 8** shows the two areas with low relief to block the cap lock 139, where the lock is closed and opened. They have a chamfered shape that functions as the mouthpiece of the cylindrical section of the knobs, the vertical groove has a through draft to free the knob and the horizontal slot has a half-round shape to receive the lock.

The negative air stream seed dispenser, according to the present invention, comprises a set of triple top contact and double bottom contact flushes, linked together by means of a bridge 174. This set has an upper clamp with eccentric shaft 152 which gives it the movement and offset in contact with the groove 173.

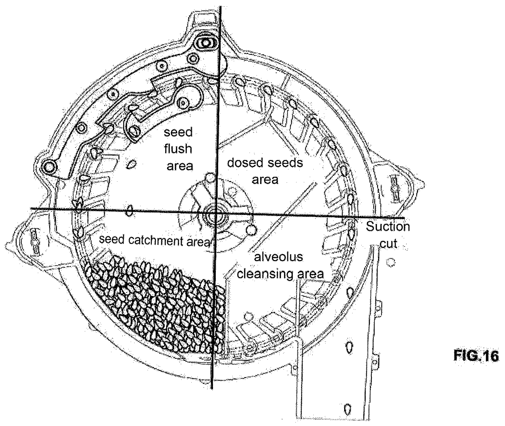

**Figure 16** shows the main zones of the dispenser corresponding to the dispensing stages, using two shafts perpendicular to each other that divide the quadrant into four zones.

In **Figure 15** the flush set has a second linkage point consisting of a fixed axis 175, which acts as a center of rotation of the set.

On the bridge there is a projection to receive and centralize a compression spring, by which it gives a slight load to the flush set to maintain the necessary permanent contact of said flush on the seed plate.

The upper triple contact 151 acts on the circumference of the outer tangent of the seed plate pockets. These three elliptical projections with beveled edges are the ones that come into contact with the seeds. The three contacts generate interference on the plate's alveolus, reducing the capture area and favoring the positioning of a single seed per alveolus. With reference to the clockwise rotation of the plate, the plate rotates clockwise. These flushes, considering their position with respect to the dial of an analogical clock, act in the zone of the upper left quarter, which would be the hourly position between 9 a.m. and 12 p.m. of said clock taken as reference.

The contact is made in a progressive way against the seeds lodged in each alveolus, producing slight rubbing against them to leave only one seed per alveolus.

In this way, it is possible to generate a level that allows the removal of duplicated or tripled seeds for each alveolus of the sowing plate and the remaining seeds re-enter the catchment area, being the last superior contact the one in charge of ensuring that only one seed per alveolus is located and positioned.

The two lower contacts 171 work on the circumference of the inner tangent of the cells, being these circular contacts with beveled edges the ones in charge of leveling the seeds on the cell in combination with the upper leveler to leave only one seed positioned per cell.

This set of flushes adapts to different types of seeds without the need to replace parts when changing the sowing plate for different types of seed sizes of different crops.

This is a great difference from other sowing systems, which must replace the set of flushes together with the sowing plate.

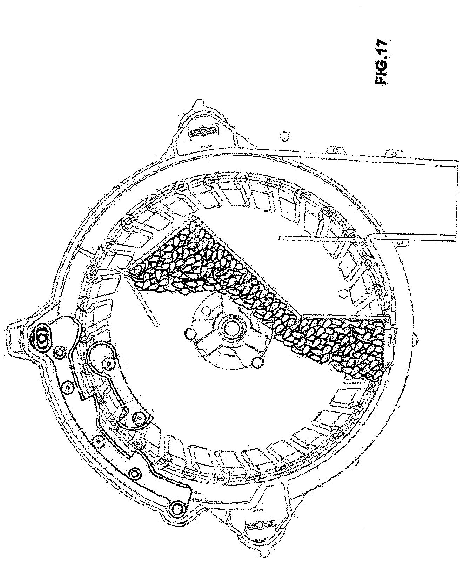

It is also important to have a dispenser that can keep the seeds in the collection container, even when the dispenser is placed in a horizontal position (see **Figure 17**). This position is adopted during transport on those models of sowing machines, where the transport position requires turning the seed bodies to reduce the transport width.

In said **Figure 17** a detail of the interior of the dispenser according to the invention can be observed in the transport position, wherein the delimiting brushes prevent the seeds contained in its interior from falling into the discharge tube during the transfer of those sowing machines which need to rotate the sowing bodies.

## Claims

1. Pneumatic dispenser for sowing multiform seeds in low and high doses, comprising:
a housing (122) consisting of a first half and a second half with means of closure that fix both halves to each other, wherein the first half comprises a channel for the entry of seeds and having on the periphery a plurality of air recirculation slots (129), and the second right half comprises an air suction tube (102);
and, means of attachment to a seeder bracket and, underneath, a seed release sector (130) linked to an exhaust tube (108);
the pneumatic dispenser further internally houses a rotatable sowing plate (159) mounted on a three-segmented drive shaft whose center is substantially cylindrical, centering the sowing plate (159) with a drive plate (154), wherein the sowing plate comprises a plurality of cavities arranged perimetrically surrounded by depressions in low relief;
said dispenser also comprises a set of floating triple upper contact (151) and double lower contact flushes linked together by means of a bridge (174),
wherein, the set has an upper clamp with an eccentric shaft (152) that gives it movement and offset for a permanent contact against the surface of the sowing plate and with external regulation of its position, and a second point of connection consisting of a fixed shaft that constitutes a center of rotation of the set,
wherein, on said bridge (174), there is a ledge with for the assembly of a compression spring that regulates the permanent contact of said flushes on the sowing plate (159), and
wherein the triple upper contact is configured to act on the circumference of the outer tangent of the seed plate cavities and the double lower contact is configured to act on the circumference of the inner tangent of the seed plate cavities.

2. The pneumatic dispenser of claim 1, **characterized in that** the feeding of seeds inside the dispenser is by gravity or by air current.

3. The pneumatic dispenser of claim 1 or 2, **characterized in that** the feeding of seeds to the interior of the dispenser is regulated by means of a guillotine (141), wherein the vertically mounted guillotine (141) in movable form has a substantially triangular shape and is commanded by means of an external knob (138) with graduated numbered graduation to regulate by means of partial closing the flow of seeds.

4. The pneumatic dispenser according to any one of claims 1 to 3, **characterized in that** the triple upper contact (151) of the set of flushes is constituted by three elliptical ledges with beveled edges that during sowing come into contact with the seeds.

5. The pneumatic dispenser of claim 4, **characterized in that** the contact during the sowing is carried out in a light and progressive way against the seeds lodged in each cavity, generating a level that allows to remove seeds duplicated or triplicated by each cavity of the sowing plate (159).

6. The pneumatic dispenser of the claim 5, **characterized in that** the last upper contact is the one in charge of assuring the location and positioning of a single seed in the cavity.

7. The pneumatic dispenser of any one of the claims 1 to 6, **characterized in that** the double lower contact during sowing is made on the circumference of the inner tangent of the seed plate cavities, these contacts being circular in shape and with beveled edges, which are responsible for leveling the seeds on each cavity of the sowing plate (159) which, in combination with the upper flush, leaves only one seed positioned per cavity.

8. The pneumatic dispenser of any one of the claims 5 to 7, **characterized in that** the excess seeds re-enter the catchment area.

9. The pneumatic dispenser of any one of the previous claims, **characterized in that** the sowing plate (159) comprises a plurality of seed plate cavities whose size is determined by the type of seed to be implanted being smaller than the seed, wherein each seed plate cavity is surrounded by a low relief to capture seeds and remove seeds during the loading of seeds on the sowing plate (159).

10. The pneumatic dispenser of claim 9, **characterized in that** the right lateral sector of the low relief is at right angles to remove the seeds during rotation, and the opposite side of the low relief is inclined to detach any foreign particles lodged in the low relief.

11. The pneumatic dispenser of claim 9 and 10, **characterized in that** the sowing plate is mounted on the drive plate (154) by means of a manually operated locking piece.

12. The pneumatic dispenser of any one of claims 9 to 11, **characterized in that** the set of flushes is not replaced when the sowing plate (159) is replaced according to the size of the seed plate pocketis determined by the type of seed to be implanted.

13. The pneumatic dispenser of any one of the preceding claims, **characterized in that** delimiting brushes (145) prevent the seeds contained inside the dispenser from falling into the exhaust tube (108) when the dispenser is in a horizontal position in those seed drills that carry out rotation of main bracket bar of sowing bodies.

14. The dispenser of claim 13, **characterized in that** the dispenser is configured to remain in a horizontal position when it is tilted into the transport position during the movement of the seed drills that need to turn the seed bodies to reduce the transport width.

## Patentansprüche

1. Pneumatischer Verteiler für die Ausbringung von unterschiedlichen Formen Saatgut in niedrigen und hohen Dosierungen, umfassend:
ein Gehäuse (122), das aus einer ersten und einer zweiten Hälfte besteht, versehen mit Verschlussvorrichtungen, die die beiden Hälften zusammenhalten, wobei die erste Hälfte einen Kanal für den Saatguteintritt umfasst und am Außenrand eine Vielzahl von Lüftungsschlitzen (129) aufweist und die rechts befindliche zweite Hälfte ein Luftansaugrohr (102) umfasst;
und Vorrichtungen zur Befestigung an einer Sämaschinenhalterung und darunter einen mit einem Auslassrohr (108) verbundenen Saatgutausgabebereich (130) aufweist;
Im Inneren beherbergt der pneumatische Verteiler ferner eine auf einer dreiteiligen Antriebswelle montierte drehbare Säscheibe (159), deren Mitte im Wesentlichen zylindrisch ist und die Säscheibe (159) auf einer Antriebsscheibe (154) zentriert, wobei die Säscheibe eine Vielzahl von perimetrisch angeordneten Aussparungen, umgeben von als Tiefrelief ausgebildeten Senkungen, umfasst;
wobei der genannte Verteiler auch einen Satz schwimmender Abstreifer in Form eines dreiteiligen oberen Kontaktstücks (151) und eines zweiteiligen unteren Kontaktstücks, die durch eine Brücke (174) miteinander verbunden sind, umfasst,
wobei der Satz eine obere Klemme mit exzentrischer Achse (152) mit außenliegender Positionsregulierung, die Bewegung und Auslenkung zwecks ständigen Kontakts mit der Oberfläche der Säscheibe ermöglicht, sowie einen zweiten Verbindungspunkt, der aus einer festen Achse als Drehmittelpunkt des Satzes besteht, aufweist,
wobei sich auf der genannten Brücke (174) eine Leiste mit einer Druckfederanordnung zur Regulierung des ständigen Kontakts der genannten Abstreifer mit der Säscheibe (159) befindet, und
wobei das dreiteilige obere Kontaktstück so ausgelegt ist, dass es auf den Umfang der äußeren Tangente der Saatscheibenaussparungen wirkt, und das zweiteilige untere Kontaktstück so ausgelegt ist, dass es auf den Umfang der inneren Tangente der Saatscheibenaussparungen wirkt.

2. Pneumatischer Verteiler nach Anspruch 1, **dadurch gekennzeichnet, dass** die Förderung von Saatgut im Verteiler durch Schwerkraft oder mittels Luftstrom erfolgt.

3. Pneumatischer Verteiler nach Anspruch 1 oder 2, **dadurch gekennzeichnet, dass** die Zufuhr von Saatgut in den Verteiler über einen Schieber (141) erfolgt, wobei der senkrecht angebrachte, bewegliche Schieber (141) eine im Wesentlichen dreieckige Form aufweist und über einen außen angebrachten Knauf (138) mit nummerierter Skala zum Regulieren des Saatgutflusses durch teilweises Schließen bedient wird.

4. Pneumatischer Verteiler nach einem der Ansprüche 1 bis 3, **dadurch gekennzeichnet, dass** das dreiteilige obere Kontaktstück (151) des Abstreifersatzes aus drei elliptischen Leisten mit abgeschrägten Kanten, die beim Säen mit dem Saatgut in Kontakt kommen, besteht.

5. Pneumatischer Verteiler nach Anspruch 4, **dadurch gekennzeichnet, dass** beim Säen der Druck gegen die in den einzelnen Aussparungen befindlichen Saatkörner leicht und fortschreitend erfolgt, wodurch eine gleichmäßige Verteilung entsteht, die das Entfernen von doppelt oder dreifach vorhandenen Saatkörnern in den einzelnen Aussparungen der Säscheibe (159) ermöglicht.

6. Pneumatischer Verteiler nach Anspruch 5, **dadurch gekennzeichnet, dass** das letzte obere Kontaktelement dazu dient, die Lage und Positionierung eines einzelnen Saatkorns in der Aussparung sicherzustellen.

7. Pneumatischer Verteiler nach einem der Ansprüche 1 bis 6, **dadurch gekennzeichnet, dass** das zweiteilige untere Kontaktstück beim Säen am Umfang der inneren Tangente der Saatscheibenaussparungen anliegt, wobei diese Kontaktelemente eine runde Form mit abgeschrägten Kanten aufweisen, die für die gleichmäßige Verteilung der Saatkörner in den einzelnen Aussparungen der Säscheibe (159) sorgen, wodurch in Kombination mit dem oberen Abstreifer jede Aussparung mit nur einem Saatkorn bestückt wird.

8. Pneumatischer Verteiler nach einem der Ansprüche 5 bis 7, **dadurch gekennzeichnet, dass** das überschüssige Saatgut wieder in den Aufnahmebereich gelangt.

9. Pneumatischer Verteiler nach einem der vorstehenden Ansprüche, **dadurch gekennzeichnet, dass** die Säscheibe (159) eine Vielzahl von Saatscheibenaussparungen umfasst, deren Größe durch die Art des zu säenden Saatkorns bestimmt wird und kleiner als das Saatkorn ist, wobei jede Saatscheibenaussparung von einem Tiefrelief zum Erfassen und Entfernen von Saatkörnern beim Befüllen der Säscheibe (159) mit Saatkörnern umgeben ist.

10. Pneumatischer Verteiler nach Anspruch 9, **dadurch gekennzeichnet, dass** das rechte Seitensegment des Tiefreliefs einen rechten Winkel aufweist, um während der Rotation Saatkörner zu entfernen, und die gegenüberliegende Seite des Tiefreliefs abgeschrägt ist, um etwaige im Tiefrelief befindliche Fremdkörper zu lösen.

11. Pneumatischer Verteiler nach Anspruch 9 und 10, **dadurch gekennzeichnet, dass** die Säscheibe mithilfe eines handbetätigten Verriegelungselements auf der Antriebsscheibe (154) angebracht ist.

12. Pneumatischer Verteiler nach einem der Ansprüche 9 bis 11, **dadurch gekennzeichnet, dass** beim Austausch der Säscheibe (159) der Abstreifersatz nicht ausgetauscht wird, da die Größe des Saatscheibenfachs durch die Art des zu säenden Saatguts bestimmt wird.

13. Pneumatischer Verteiler nach einem der vorstehenden Ansprüche, **dadurch gekennzeichnet, dass** durch Begrenzungsbürsten (145) verhindert wird, dass bei horizontaler Lage des Verteilers an Sämaschinen, deren Haupthalterungsstange der Saateinheit eine Drehbewegung ausführt, das im Verteiler enthaltene Saatgut in das Auslassrohr (108) fällt.

14. Verteiler nach Anspruch 13, **dadurch gekennzeichnet, dass** der Verteiler zum Verbleiben in einer horizontalen Position ausgelegt ist, wenn er während der Bewegung von Sämaschinen, die zum Verringern der Transportbreite eine Drehung der Saateinheit ausführen, in die Transportposition gekippt wird.

## Revendications

1. Distributeur pneumatique pour semer des graines multiformes en doses faibles et élevées, comprenant :
un boîtier (122) consistant en une premier moitié et une deuxième moitié avec des moyens de fermeture qui fixent les deux moitiés l'une à l'autre, dans lequel la premier moitié comprend un passage pour l'entrée de graines et ayant sur la périphérie une pluralité de fentes de recirculation d'air (129), et la deuxième moitié droite comprend un tube d'aspiration d'air (102) ;
et, des moyens de fixation à un support de semoir et, au-dessous, un secteur de libération de graines (130) relié à un tube de sortie (108) ;
le distributeur pneumatique loge en outre à l'intérieur une plaque de semis tournante (159) montée sur un arbre d'entraînement à trois segments dont le centre est sensiblement cylindrique, centrant la plaque de semis (159) avec une plaque d'entraînement (154), dans lequel la plaque de semis comprend une pluralité de cavités disposées de manière périmétrique entourées par des dépressions en bas-relief ;
ledit distributeur comprend en outre un ensemble de trois chicanes flottantes à triple contact supérieur (151) et double contact inférieur reliées entre elles au moyen d'un pont (174),
dans lequel, l'ensemble présente une pince supérieure avec un arbre excentrique (152) qui permet un mouvement et un décalage pour un contact permanent contre la surface de la plaque de semis et avec une régulation externe de sa position, et un deuxième point de liaison consistant en un arbre fixe qui constitue un centre de rotation de l'ensemble,
dans lequel, sur ledit pont (174), il y a un rebord avec l'assemblage d'un ressort de compression qui régule le contact permanent desdites chicanes sur la plaque de semis (159), et
dans lequel le triple contact supérieur est configuré pour agir sur la circonférence de la tangente extérieure des cavités de la plaque à graines et le contact double inférieur est configuré pour agir sur la circonférence de la tangente intérieure des cavités de la plaque à graines.

2. Distributeur pneumatique selon la revendication 1, **caractérisé en ce que** l'alimentation de graines à l'intérieur du distributeur est réalisé par gravité ou par un courant d'air.

3. Distributeur pneumatique selon la revendication 1 ou 2, **caractérisé en ce que** l'alimentation de graines à l'intérieur du distributeur est régulée par le biais d'une guillotine (141), dans lequel la guillotine (141) montée verticalement d'une manière mobile présente une forme sensiblement triangulaire et est contrôlée par le biais d'un bouton externe (138) avec une graduation numérotée graduée pour réguler par le biais d'une fermeture partielle le flux de graines.

4. Distributeur pneumatique selon l'une quelconque des revendications 1 à 3, **caractérisé en ce que** le contact triple supérieur (151) de l'ensemble de chicanes est constitué de trois rebords elliptiques avec des bords biseautés qui, pendant le semis, viennent en contact avec les graines.

5. Distributeur pneumatique selon la revendication 4, **caractérisé en ce que** le contact pendant le semis est réalisé d'une manière légère et progressive contre les graines logées dans chaque cavité, en générant un niveau qui permet d'éliminer des graines dupliquées ou triplées par chaque cavité de la plaque de semis (159).

6. Distributeur pneumatique de the revendication 5, **caractérisé en ce que** le dernier contact supérieur est celui chargé d'assurer le placement et positionnement d'une seule graine dans la cavité.

7. Distributeur pneumatique selon l'une quelconque des revendications 1 à 6, **caractérisé en ce que** le contact double inférieur, pendant le semis, est réalisé sur la circonférence de la tangente intérieure des cavités de la plaque à graines, ces contacts étant sous forme circulaire et avec des bords biseautés, qui sont chargés de niveler les graines sur chaque cavité de la plaque de semis (159) qui, en combinaison avec la chicane supérieure, ne laisse qu'une graine positionnée per cavité.

8. Distributeur pneumatique selon l'une quelconque des revendications 5 à 7, **caractérisé en ce que** les graines en excès rentrent dans la zone de captage.

9. Distributeur pneumatique selon l'une quelconque des revendications précédentes, **caractérisé en ce que** la plaque de semis (159) comprend une pluralité de cavités de la plaque à graines dont la taille est déterminée par le type de graine à implanter étant plus petite que la graine, dans lequel chaque cavité de la plaque à graines est entourée par un bas-relief pour capter des graines et retirer des graines pendant le chargement de graines sur la plaque de semis (159).

10. Distributeur pneumatique selon la revendication 9, **caractérisé en ce que** le secteur latéral droit du bas-relief est à angle droit pour retirer les graines pendant la rotation, et le côté opposé du bas-relief est incliné pour détacher des éventuelles particules étrangers logées dans le bas-relief.

11. Distributeur pneumatique selon la revendication 9 et 10, **caractérisé en ce que** la plaque de semis est montée sur la plaque d'entraînement (154) par le biais d'une pièce de verrouillage manuellement actionnée.

12. Distributeur pneumatique selon l'une quelconque des revendications 9 à 11, **caractérisé en ce que** l'ensemble de chicanes ne sont pas remplacées lorsque la plaque de semis (159) est remplacée selon la taille des alvéoles de la plaque à graines déterminé par le type de graine à implanter.

13. Distributeur pneumatique selon l'une quelconque des revendications précédentes, **caractérisé en ce que** des brosses de délimitation (145) empêchent les graines contenues à l'intérieur du distributeur de tomber dans le tube de sortie (108) lorsque le distributeur se trouve dans une position horizontale dans les semoirs qui mettent en oeuvre la rotation de la barre de support principale des corpos de semis.

14. Distributeur selon la revendication 13, **caractérisé en ce que** le distributeur est configuré pour rester dans une position horizontale lorsqu'il est incliné dans la position de transport pendant le mouvement des semoirs qui doivent tourner les corps de graine pour réduire la largeur de transport.
